# EUROPÄISCHE PATENTSCHRIFT

(11) **EP 4 187 343 B1**
(45) Veröffentlichungstag und Bekanntmachung des Hinweises auf die Patenterteilung: **18.09.2024**
(21) Anmeldenummer: 21211063.9
(22) Anmeldetag: 29.11.2021
(51) Int. Cl.: G05D 1/00

(54) **ORTUNGSMARKE, INSBESONDERE FÜR AUTONOME FAHRZEUGE**
LOCATION MARK, IN PARTICULAR FOR AUTONOMOUS VEHICLES
MARQUAGE DE LOCALISATION, EN PARTICULIER POUR VÉHICULES AUTONOMES

(43) Veröffentlichungstag der Anmeldung: 31.05.2023
(73) Patentinhaber: Pepperl+Fuchs SE, 68307 Mannheim (DE)
(72) Erfinder: HORNBERGER, Armin, 12277 Berlin (DE)
(74) Vertreter: Fischer, Uwe

(56) Entgegenhaltungen:
- US-A- 4 716 530
- US-A- 4 918 362
- US-A1- 2019 384 294

## Beschreibung

Die Erfindung betrifft Ortungsmarken, insbesondere für autonome sich selbst ortende Fahrzeuge, Verfahren zum Anbringen von Ortungsmarken, Schablonen zum Zwecke des Anbringens von Ortungsmarken und Transportanlagen mit Ortungsmarken und Transportfahrzeugen.

Für den Einsatz in automatisierten Transportanlagen sind autonom fahrende Transportfahrzeuge bekannt. Bei vielen Bauarten solcher Transportfahrzeuge sind Sensoren, beispielsweise in Form von Kameras, im Bereich der Fahrzeugmitte des Fahrzeugbodens angeordnet, um am Boden angebrachte Ortungsmarken zu erfassen und eine Ortung durchzuführen. Die Ortungssignale beziehen sich daher in der Regel auf die Fahrzeugmitte.

Ortungsmarken, die auf einem Boden aufgebracht sind und maschinell lesbare Markenabschnitte aufweisen, sowie Verfahren zum Anbringen solcher Ortungsmarken sind aus der US-Patentschrift US 4,918,362 A1 bekannt.

Die US-Offenlegungsschrift US 2019/384294 A1 beschreibt ein autonom fahrendes Fahrzeug, das sich selbst orten kann.

Der Erfindung liegt die Aufgabe zugrunde, ein Verfahren zum Anbringen von Ortungsmarken anzugeben, sodass diese gegenüber herkömmlichen Ortungsmarken verbesserte Eigenschaften aufweisen, insbesondere eine größere Lebensdauer erreichen können.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Ein wesentlicher Vorteil der erfindungsgemäß angebrachten Ortungsmarke ist darin zu sehen, dass diese segmentiert ist und zumindest einen Trennpfad aufweist, der die genannten beiden Markenabschnitte voneinander trennt. Die Erfindung geht von der Beobachtung aus, dass bei vielen autonom fahrenden Fahrzeugen, insbesondere Transportfahrzeugen im Bereich von Transportanlagen wie automatisierten Warenlagern etc., vorne und/oder hinten - bezogen auf die Fahrzeuglängsachse mittig - angeordnete Stützräder vorhanden sind, die es den Transportfahrzeugen ermöglichen, sich mit minimalem Raumbedarf, im Idealfall auf der Stelle, um die eigene Mittenachse drehen zu können. Diese mittigen Stützräder haben jedoch den Nachteil, dass diese - wegen der ebenfalls mittig angeordneten Ortungssensoren - häufig mittig über die am Boden angebrachten Ortungsmarken fahren und diese verschleißen. Um den Verschleiß zu reduzieren, ist die erfindungsgemäß angebrachte Ortungsmarke segmentiert und mit mindestens zwei Markenabschnitten ausgestattet, die durch einen Trennsteg voneinander getrennt sind; dieser Trennsteg reduziert den Verschleiß der Markenabschnitte, da diese nicht oder zumindest nicht mehr mittig von den mittigen Stützrädern überrollt werden. Ist beispielsweise der Trennsteg so breit wie die Radbreite der Stützräder, so kann ein Überfahren der Markenabschnitte vollständig vermieden werden. Eine Ortung des Fahrzeugs bleibt in der Regel dennoch unverändert möglich, weil die üblicherweise zur Ortung eingesetzten fahrzeugseitigen Ortungssysteme (bzw. deren Sensoren und/oder Kameras) einen ausreichend großen Erfassungsbereich gewährleisten, sodass beim mittigen Überfahren des Trennstegs die voneinander getrennten Markenabschnitte immer noch sicher detektiert und ausgewertet werden können.

Besonders vorteilhaft ist es, wenn die Ortungsmarke zur Selbstortung von Fahrzeugen einer vorgegebenen Bauart ausgelegt ist. Im Falle einer solchen Ausgestaltung ist es von Vorteil, wenn die Breite des Trennpfads mindestens so groß wie die Radbreite zumindest eines Rades der Fahrzeugbauart ist und diesem zumindest einen Rad das Passieren des Trennpfads ohne Berührung der Markenabschnitte ermöglicht.

Wie bereits erwähnt, sind für den Verschleiß der Ortungsmarken primär mittig angeordnete Stützräder verantwortlich. Aus diesem Grunde ist die Breite des Trennpfads vorzugsweise mindestens so groß wie die Radbreite der - bezogen auf die Fahrzeuglängsachse - fahrzeugmittig angeordneten Stützräder.

Die Breite des Trennpfads liegt bevorzugt in einem Bereich zwischen 5 und 15 cm und kann beispielsweise 10cm ± 10% betragen.

Auch kann in vorteilhafter Weise vorgesehen sein, dass die Ortungsmarke mehr als zwei Markenabschnitte aufweist, also mehrfach segmentiert ist.

Bei einer besonders bevorzugten Ausgestaltung ist vorgesehen, dass die Ortungsmarke einen dritten kodierten, maschinell lesbaren Markenabschnitt, der ebenfalls für sich allein die Ortungsmarke identifiziert, und einen vierten kodierten, maschinell lesbaren Markenabschnitt aufweist, der ebenfalls für sich allein die Ortungsmarke identifiziert.

Der Trennpfad trennt vorzugsweise auch den dritten und vierten Markenabschnitt voneinander.

Der Trennpfad verläuft vorzugsweise geradlinig zwischen dem ersten und zweiten sowie dem dritten und vierten Markenabschnitt.

Vorteilhaft ist es, wenn der erste und dritte Markenabschnitt auf einer Seite des Trennpfads liegen und in Trennpfadrichtung des ersten Trennpfads gesehen hintereinander (vorzugsweise fluchtend) angeordnet sind und der zweite und vierte Markenabschnitt auf der anderen Seite des Trennpfads liegen und in Trennpfadrichtung des ersten Trennpfads gesehen hintereinander (vorzugsweise fluchtend) angeordnet sind.

Auch ist es von Vorteil, wenn zusätzlich zu dem genannten Trennsteg, nachfolgend erster Trennsteg genannt, zumindest ein zweiter Trennsteg vorhanden ist, der winklig zu dem ersten Trennsteg angeordnet ist.

Vorteilhaft ist es, wenn der erste und zweite Trennsteg senkrecht angeordnet sind.

Der zweite Trennsteg trennt vorzugsweise den ersten und dritten Markenabschnitt und/oder den zweiten und vierten Markenabschnitt voneinander.

Aus Symmetriegründen ist es vorteilhaft, wenn der erste und zweite Trennpfad ein Kreuz bilden.

Der Mittelpunkt des Kreuzes bildet vorzugsweise einen Drehsymmetriepunkt der Ortungsmarke. Die Drehsymmetrie bezieht sich vorzugsweise auf einen Drehsymmetriewinkel von 90°.

Jeder der Markenabschnitte enthält vorzugsweise eine Zusatzkodierung, die den jeweiligen Markenabschnitt von jedem anderen Markenabschnitt der Ortungsmarke unterscheidet und die räumliche Lage des jeweiligen Markenabschnitts innerhalb der Ortungsmarke angibt. Eine solche Ausgestaltung ermöglicht in vorteilhafter Weise eine besonders genaue Ortsbestimmung und vereinfacht es dem Fahrzeug, die Trennstege jeweils mittig zu überfahren.

Bei einer bevorzugten Ausgestaltung ist insbesondere mit Blick auf Redundanz vorgesehen, dass jeder der Markenabschnitte jeweils zwei oder mehr Unterabschnitte aufweist, die jeweils für sich allein die Ortungsmarke identifizieren.

Die Unterabschnitte jedes Markenabschnitts sind vorzugsweise jeweils in Form eines Gitters angeordnet. Sie bilden vorzugsweise ein NxN-Array pro Markenabschnitt.

Die Schablone weist vorzugsweise einen ersten Trennsteg, der einen ersten Trennpfad definiert, und einen zweiten Trennsteg, der einen zweiten Trennpfad definiert, auf.

Die zwei Trennstege bilden vorzugsweise ein Kreuz, in dessen Kreuzungspunkt die Schablone ein Justageloch aufweist.

Beim Aufsetzen der Schablone auf dem Boden wird das Justageloch vorzugsweise über einer auf dem Boden vorhandenen Markierung justiert.

Auch kann in vorteilhafter Weise vorgesehen sein, dass die Schablone zumindest eine Justagemarkierung, insbesondere in Form einer Ausrichthilfe, vorzugsweise in Form eines Pfeils, aufweist, die auf dem oder einem der Trennstege aufgebracht ist.

Bei der letztgenannten Variante ist es vorteilhaft, wenn die Schablone auf dem Boden ausgerichtet wird, indem diese um die auf dem Boden angebrachte Markierung gedreht wird, bis die Justagemarkierung eine korrekte Ausrichtung der Schablone in Bezug auf eine vorgegebene Richtung aufweist, insbesondere in eine vorgegebene Himmelsrichtung oder auf eine vorgegebene entfernte Ortsstelle zeigt.

Alternativ oder zusätzlich kann die Schablone zumindest einen Adapter aufweisen, der ein Anbringen eines eine Entfernungsmessung und/oder Ortsmessung und/oder Orientierungsmessung ermöglichenden Messgeräts ermöglicht. Ein solches lösbar an der Schablone angebrachtes Messgerät bildet mit der Schablone eine lösbare Schablone-Messgerät-Einheit.

Alternativ kann ein solches Messgerät, das eine Entfernungsmessung und/oder Ortsmessung und/oder Orientierungsmessung ermöglicht, auch fest an der Schablone angebracht sein und mit dieser eine nicht-lösbare Schablone-Messgerät-Einheit bilden.

Im Falle einer Schablone mit Adapter ist es vorteilhaft, wenn das Messgerät auf der Schablone montiert wird und unter Heranziehung von Messergebnissen des Messgeräts die Schablone auf dem Boden positioniert und/oder ausgerichtet wird.

Die Erfindung bezieht sich außerdem auf eine Schablone mit den Merkmalen gemäß Patentanspruch 11.

Die Erfindung bezieht sich außerdem auf eine Transportanlage mit zumindest einem Transportfahrzeug und zumindest einer Ortungsmarke, die auf einem von dem Transportfahrzeug zu befahrenden Boden angebracht ist, wobei die Ortungsmarke dem Transportfahrzeug beim Überfahren der Ortungsmarke eine Selbstortung ermöglicht. Erfindungsgemäß ist vorgesehen, dass die Ortungsmarke eine Ortungsmarke ist, die nach einem Verfahren wie oben beschrieben hergestellt worden ist.

Vorteilhaft ist es, wenn die Breite des Trennpfads mindestens so groß wie die Radbreite zumindest eines Rades des Transportfahrzeugs ist und diesem Rad das Passieren des Trennpfads ohne Berührung der Markenabschnitte ermöglicht.

Die Erfindung wird nachfolgend anhand von Ausführungsbeispielen näher erläutert; dabei zeigen beispielhaft
- Figur 1: einen Abschnitt eines Ausführungsbeispiels für eine erfindungsgemäße Transportanlage,
- Figur 2: ein Ausführungsbeispiel für eine Ortungsmarke mit zwei Segmenten, die jeweils einen Markenabschnitt der Ortungsmarke bilden,
- Figur 3: ein Ausführungsbeispiel für eine Ortungsmarke mit vier Segmenten, die jeweils einen Markenabschnitt der Ortungsmarke bilden,
- Figur 4: ein Ausführungsbeispiel für eine Schablone zur Herstellung der Ortungsmarke gemäß Figur 3,
- Figur 5: ein Ausführungsbeispiel für ein Verfahren zum Anbringen von Ortungsmarken auf einem Boden einer Transportanlage, beispielsweise der Transportanlage gemäß Figur 1,
- Figur 6: ein weiteres Ausführungsbeispiel für ein Verfahren zum Anbringen von Ortungsmarken auf einem Boden einer Transportanlage, beispielsweise der Transportanlage gemäß Figur 1,
- Figur 7: ein weiteres Ausführungsbeispiel für eine Ortungsmarke mit vier Segmenten, die jeweils einen Markenabschnitt der Ortungsmarke bilden,
- Figur 8: das Anbringen der Ortungsmarke gemäß Figur 7, beispielsweise mit der Schablone gemäß Figur 4 auf einem Boden einer Transportanlage, beispielsweise der Transportanlage gemäß Figur 1.

In den Figuren werden der Übersicht halber für identische oder vergleichbare Komponenten dieselben Bezugszeichen verwendet.

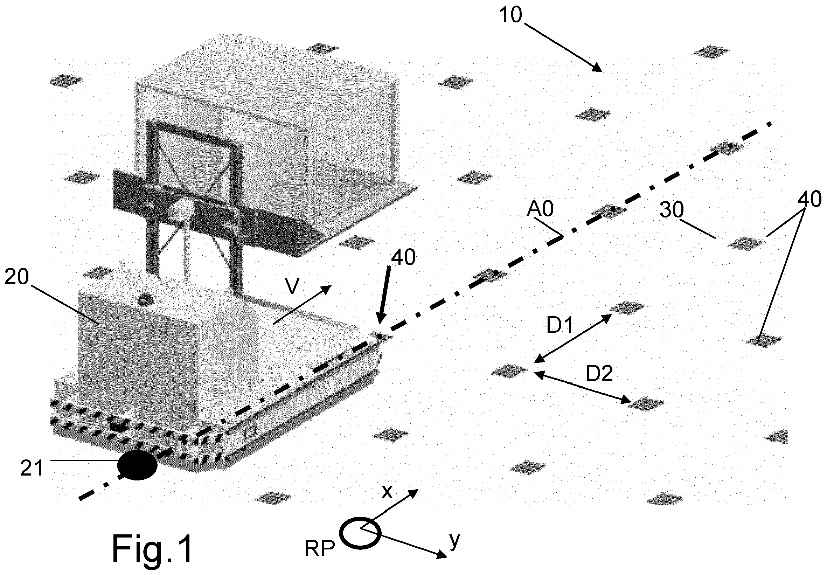

Die Figur 1 zeigt einen Abschnitt eines Ausführungsbeispiels für eine erfindungsgemäße Transportanlage 10. Man erkennt ein Transportfahrzeug 20, das einen mit einer Vielzahl an Ortungsmarken 40 versehenen Boden 30 befährt. Bei dem Ausführungsbeispiel sind die Ortungsmarken 40 unter Bildung eines regelmäßigen Gitters bzw. eines regelmäßigen Ortsmarkenarrays angeordnet; die Abstände D1 und D2 zwischen benachbarten Ortungsmarken 40 sind vorzugsweise identisch.

Das Transportfahrzeug 20 ist mit einem nicht dargestellten Ortungssensor ausgestattet, der unten am Fahrzeugboden mittig angeordnet ist und die Ortungsmarken 40 erfassen kann. Der Ortungssensor umfasst vorzugsweise eine Kamera zum Erzeugen von Bildsignalen und eine Auswerteinrichtung, die die Bildsignale der Kamera auswertet und beim Überfahren der Ortungsmarken 40 die Ortungsmarken 40 erkennt und identifiziert. Geeignete Ortungssensoren für das Transportfahrzeug sind beispielsweise unter dem Produktnamen PGV (position guided vision) erhältlich.

Jede der Ortungsmarken 40 ist jeweils mit einer individuellen Kodierung ausgestattet, beispielsweise in Form eines zweidimensionalen Codes wie zum Beispiel eines QR-Codes und/oder DataMatrix-Codes, die von der Auswerteinrichtung erkannt werden kann. Jeder Kodierung ist jeweils eine Ortsinformation zugeordnet, sei es beispielsweise in Form zweier Abstandsangaben in x- und y-Richtung bezogen auf einen vorgegebenen Referenzpunkt RP oder in Form von geographischen Kugelkoordinaten, die es der Auswerteinrichtung ermöglicht, sich selbst und damit das Transportfahrzeug 20 zu orten.

Die Figur 1 lässt außerdem erkennen, dass aufgrund des mittig angebrachten Ortungssensors bei einer Fahrt entlang der Fahrtrichtung V die Ortungsmarken 40 von einem mittig angebrachten Stützrad 21 ebenfalls mittig überfahren werden.

Um den Verschleiß der Ortungsmarken 40 in deren Mittenbereich zu reduzieren oder sogar komplett zu vermeiden, ist es vorteilhaft, wenn die Ortungsmarken 40 segmentiert sind und jeweils getrennt voneinander angeordnete Markenabschnitte aufweisen, die jeweils für sich allein die Ortungsmarke 40 identifizieren und eine Selbstortung des Transportfahrzeugs 20 ermöglichen. Der Beobachtungsbereich bzw. der Blickwinkel der am Fahrzeugboden des Transportfahrzeugs 20 angebrachten Kamera ist bei üblichen Kameras für diesen Zweck in der Regel ausreichend groß, sodass trotz der Segmentierung alle Markenabschnitte einer segmentierten Ortungsmarke erfasst werden können und Bildsignale erzeugt werden, die alle Markenabschnitte beschreiben; zumindest sollten Kameras, beispielsweise solche mit Weitwinkelobjektiven, eingesetzt werden, deren Erfassungsbereich eine Erfassung der hier beschriebenen Ortungsmarken 40 vollständig ermöglichen.

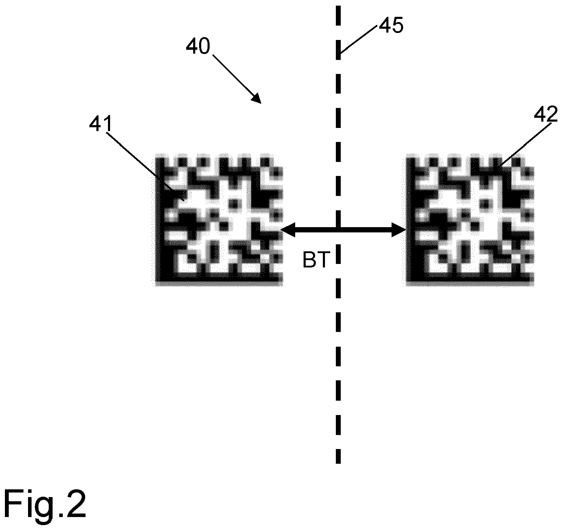

Ein erstes Ausführungsbeispiel für eine geeignet segmentierte Ortungsmarke 40 ist in der Figur 2 gezeigt. Jede Ortungsmarke 40 umfasst zwei Markenabschnitte 41-42, die jeweils durch einen Trennpfad 45 getrennt sind; der Trennpfad 45 ist bei dem Ausführungsbeispiel gemäß Figur 1 entlang der Fahrtrichtung V bzw. parallel zu der Achse A0 in Figur 1 ausgerichtet.

Die beiden Markenabschnitte 41-42 jeder Ortungsmarke 40 sind jeweils kodiert und maschinell lesbar; sie identifizieren jeweils für sich allein die Ortungsmarke 40. Die Breite BT des Trennpfads 45 ist mindestens so groß wie die Radbreite des Stützrades 21 des Transportfahrzeugs 20, sodass das Stützrad 21 ein Passieren des Trennpfads 45 ohne Berührung und ohne Abnutzung der beiden Markenabschnitte 41-42 ermöglicht.

Der Trennpfad 45 wird vorzugsweise durch einen markenabschnittsfreien Bodenabschnitt des Bodens 30 gebildet; im Falle einer solchen Ausgestaltung ist ein Überfahren der Ortungsmarke 40 entlang der Fahrtrichtung völlig verschleißfrei möglich.

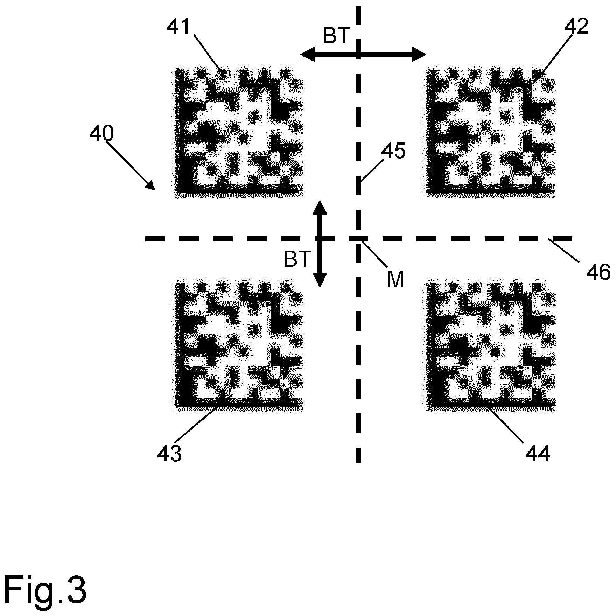

Die Figur 3 zeigt ein zweites Ausführungsbeispiel für eine segmentierte Ortungsmarke 40. Die Ortungsmarke 40 gemäß Figur 3 ist mit einem ersten Trennpfad 45, der entlang der Fahrtrichtung V bzw. der Achse A0 gemäß Figur 1 ausgerichtet ist, sowie zusätzlich mit einem zweiten Trennpfad 46, der senkrecht zur Fahrtrichtung V und senkecht zur Achse A0 gemäß Figur 1 ausgerichtet ist, ausgestattet.

Zur Bildung des zweiten Trennpfads 46 ist die Ortungsmarke 40 gemäß Figur 3 mit einem dritten kodierten und maschinell lesbaren Markenabschnitt 43, der ebenfalls für sich allein die Ortungsmarke 40 identifiziert, und einem vierten kodierten und maschinell lesbaren Markenabschnitt 44, der ebenfalls für sich allein die Ortungsmarke 40 identifiziert, ausgestattet.

Der erste Trennpfad 45 trennt auch den dritten und vierten Markenabschnitt 43-44 voneinander und verläuft geradlinig zwischen dem ersten und zweiten sowie dem dritten und vierten Markenabschnitt. Der erste und dritte Markenabschnitt liegen dabei auf einer Seite des Trennpfads 45 und sind in Trennpfadrichtung des ersten Trennpfads 45 gesehen hintereinander angeordnet; der zweite und vierte Markenabschnitt liegen auf der anderen Seite des Trennpfads 45 und sind in Trennpfadrichtung des ersten Trennpfads 45 gesehen hintereinander angeordnet. Der erste und dritte Markenabschnitt sowie der zweite und vierte Markenabschnitt sind voneinander durch den zweiten Trennpfad 46 getrennt, der senkrecht zum ersten Trennpfad 45 angeordnet ist.

Bei dem Ausführungsbeispiel gemäß Figur 3 sind der erste und zweite Trennpfad 45 und 46 senkrecht zueinander angeordnet und bilden ein Kreuz, dessen Mittelpunkt M einen Drehsymmetriepunkt der Ortungsmarke 40 um einen Drehsymmetriewinkel von 90° bildet.

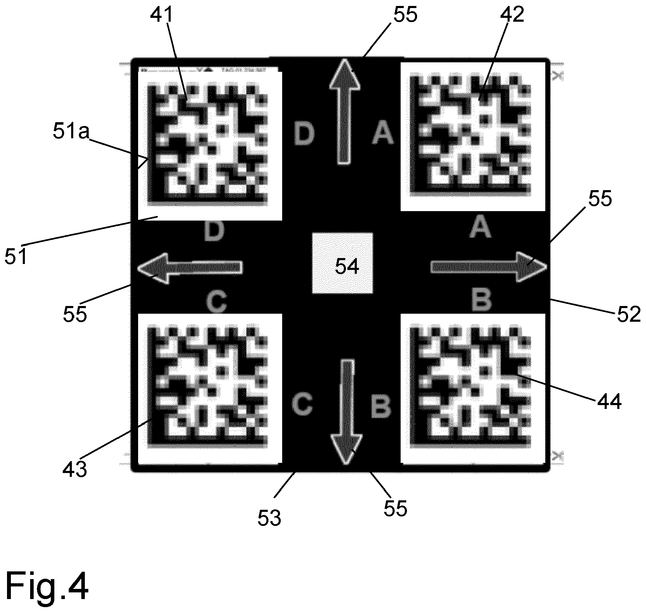

Die Figur 4 zeigt ein Ausführungsbeispiel für eine Schablone 50, mit der sich die Ortungsmarke 40 gemäß Figur 3 besonders einfach auf dem Boden 30 der Transportanlage 10 anbringen lässt.

Zum Anbringen der Ortungsmarke 40 weist die Schablone 50 für jeden Markenabschnitt 41-44 jeweils ein passendes Durchgangsloch 51 auf. Die Durchgangslöcher 51 sind durch zwei Trennstege 52-53 der Schablone 50 voneinander getrennt. Jedes Durchgangsloch 51 ist form- und größenmäßig an seinen jeweils zugeordneten Markenabschnitt 41-44 angepasst, nämlich so, dass beim Durchführen der Markenabschnitte 41-44 durch ihr jeweils zugeordnetes Durchgangsloch 51 die Markenabschnitte 41-44 jeweils durch die Ränder 51a des zugeordneten Durchgangslochs 51 justiert und ausgerichtet werden.

Die beiden Trennpfade 45-46 gemäß Figur 3 werden durch die zwei senkrecht zueinander angeordneten Trennstege 52-53 der Schablone 50 definiert, die den Boden 30 abschnittsweise freihalten bzw. abdecken. Die zwei Trennstege 52-53 bilden ein Kreuz, in dessen Kreuzungspunkt die Schablone 50 ein Justageloch 54 aufweist. Das Justageloch 54 ermöglicht es, die Schablone 50 beim Aufsetzen auf dem Boden 30 mittig über einer auf dem Boden 30 vorhandenen Markierung zu justieren.

Die Ortungsmarken 40 lassen sich mit der Schablone 50 gemäß Figur 4 beispielsweise jeweils wie folgt anbringen:
Zunächst wird die Schablone 50 auf dem Boden 30 platziert. Die Positionierung der Schablone 50 kann beispielsweise erfolgen, indem beim Aufsetzen der Schablone 50 auf dem Boden 30 das Justageloch 54 über einer auf dem Boden 30 vorhandenen Markierung positioniert wird.

Mit Blick auf die Ausrichtung der Schablone 50 ist es vorteilhaft, wenn Justagemarkierungen 55, wie sie in der Figur 4 beispielhaft in Form von Pfeilen gezeigt sind, auf den Trennstegen 52-53 aufgebracht sind. Sind solche Justagemarkierungen 55 vorhanden, so kann die Schablone 50 auf dem Boden 30 ausgerichtet werden, indem die Schablone 50 um die auf dem Boden 30 angebrachte Markierung gedreht wird, bis die Justagemarkierungen 55 eine korrekte Ausrichtung in Bezug auf eine vorgegebene Richtung aufweisen, insbesondere in eine vorgegebene Himmelsrichtung oder auf eine vorgegebene entfernte Referenzstelle zeigen.

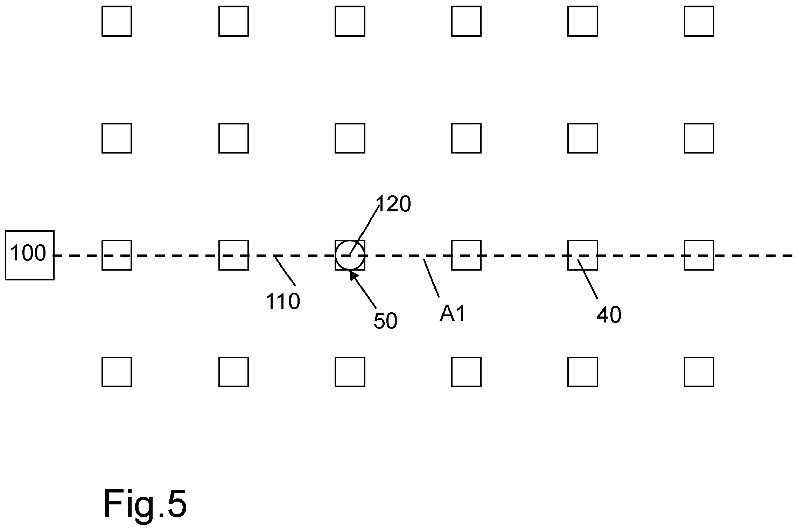

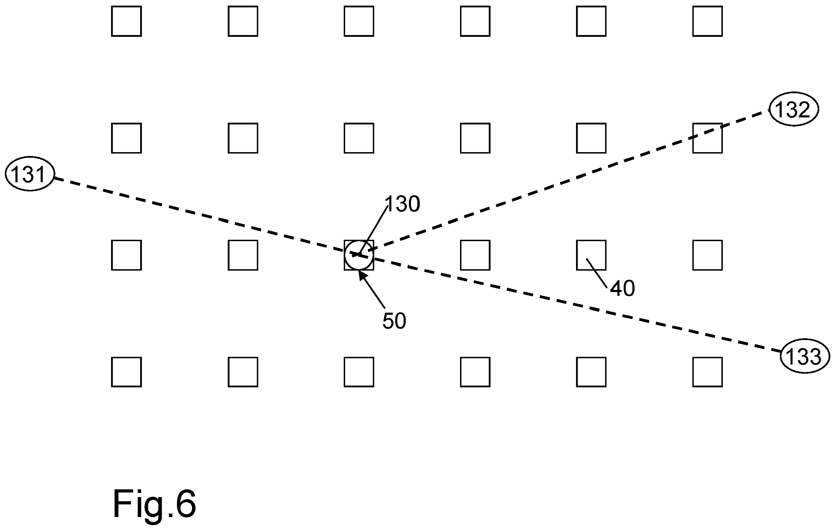

Alternativ oder zusätzlich kann vorgesehen sein, dass die Schablone 50 einen Adapter aufweist, der ein Anbringen eines eine Entfernungsmessung und/oder Ortsmessung und/oder Orientierungsmessung ermöglichenden Messgeräts ermöglicht. In einem solchen Falle kann die Positionierung unter Einbezug eines solchen Messgeräts erfolgen, wie beispielhaft in den Figuren 5 und 6 gezeigt ist.

Bei der Ausführungsvariante gemäß Figur 5 wird mittels eines Senders 100 ein Strahl, insbesondere ein Lichtstrahl 110, entlang eine Achse A1 erzeugt, auf der alle Ortungsmarken 40 einer Spalte oder Reihe des Ortsmarkenarrays liegen sollen. Mit einem auf der Schablone 50 angeordneten Messgerät 120 kann die Schablone 50 sowohl örtlich richtig positioniert als auch richtig ausgerichtet werden.

Bei der Ausführungsvariante gemäß Figur 6 ist ein auf der Schablone 50 angebrachtes Messgerät 130 geeignet, sich anhand ortfester Referenzpunkte 131-133 selbst zu orten und seine Ausrichtung zu bestimmen, sodass anhand der Messergebnisse des Messgeräts 130 die Schablone 50 sowohl örtlich richtig positioniert als auch richtig ausgerichtet werden kann.

Ist die Schablone 50 positioniert und ausgerichtet, so werden die Markenabschnitte 41-44 durch ihr jeweiliges Durchgangsloch 51 hindurchgeführt und an der durch das Durchgangsloch 51 definierten Stelle auf dem Boden 30 aufgebracht. Die Trennstege 52-53 der Schablone 50 decken die späteren Trennpfade 45-46 ab, die somit durch markenabschnittsfreie Bodenabschnitte des Bodens 30 gebildet werden.

Die Markenabschnitte 41-44 können jeweils durch bedruckte Folien gebildet sein, die auf dem Boden aufgeklebt werden; alternativ können sie direkt auf dem Boden aufgedruckt oder aufgesprüht werden. Auch können sie als mechanische stabile Platten ausgebildet sein, die auf dem Boden aufgeklebt und/ oder aufgeschraubt werden.

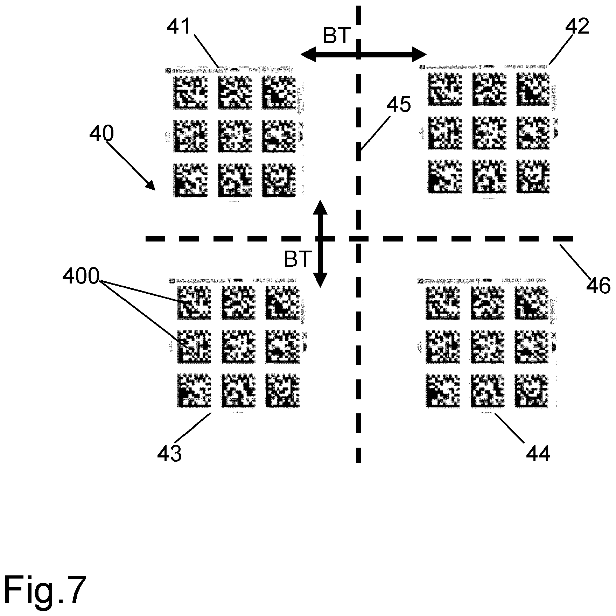

Die Figur 7 zeigt eine Ausführungsvariante der Ortungsmarke 40 gemäß Figur 3. Bei der Ausführungsvariante gemäß Figur 7 weist jeder der Markenabschnitte 41-44 jeweils zwei oder mehr Unterabschnitte 400 auf, die jeweils für sich allein die Ortungsmarke 40 identifizieren. Die Unterabschnitte 400 jedes Markenabschnitts 41-44 sind jeweils in Form eines Subgitters angeordnet und bilden ein Sub-NxN-Array (hier N=3) pro Markenabschnitt.

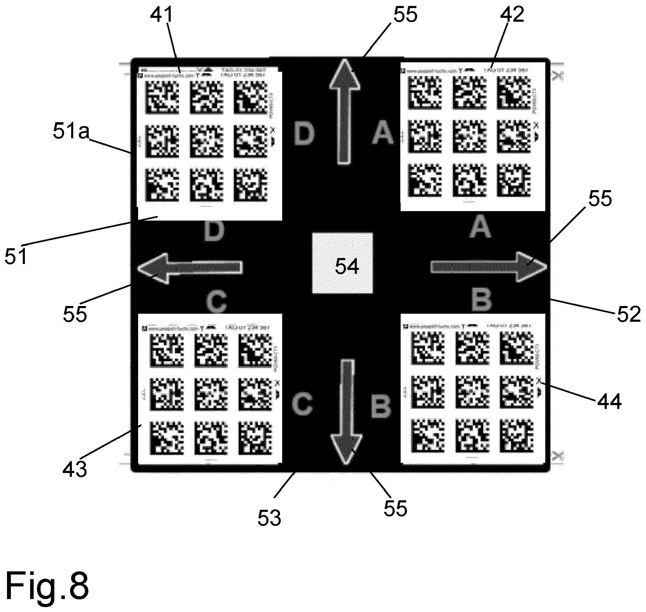

Die Figur 8 zeigt eine Schablone beim Anbringen der Ortungsmarke 40 gemäß Figur 7; die Schablone kann mit der Schablone 50 gemäß Figur 3 identisch sein.

Bei den oben erläuterten Ausführungsbeispielen ist es vorteilhaft, wenn jede der Markenabschnitte 41-42 eine Zusatzkodierung enthält, die den jeweiligen Markenabschnitt von jedem anderen Markenabschnitt derselben Ortungsmarke 40 unterscheidet und die räumliche Lage des jeweiligen Markenabschnitts innerhalb der Ortungsmarke 40 angibt. Beispielsweise kann dem ersten Markenabschnitt 41 als Zusatzkodierung der Buchstabe A, dem zweiten Markenabschnitt 42 als Zusatzkodierung der Buchstabe B, dem dritten Markenabschnitt 43 als Zusatzkodierung der Buchstabe C und dem vierten Markenabschnitt 44 als Zusatzkodierung der Buchstabe D zugeordnet sein. Vorteilhaft ist es, wenn die Markenabschnitte 41-44 mit ihrer jeweiligen Zusatzkodierung beschriftet sind; auch kann die Schablone 50 mit den entsprechenden Zusatzkodierungen wie beispielsweise die genannten Buchstaben A-D beschriftet sein, um nach dem Aufsetzen der Schablone 50 auf dem Boden 30 eine korrekte Auswahl der Markenabschnitte 41-44 zu vereinfachen und Verwechslungen zu vermeiden.

Abschließend sei erwähnt, dass die Merkmale aller oben beschriebenen Ausführungsbeispiele untereinander in beliebiger Weise kombiniert werden können, um weitere andere Ausführungsbeispiele der Erfindung zu bilden. Auch können alle Merkmale von Unteransprüchen jeweils mit jedem der nebengeordneten Ansprüche, also auch anderen als in den folgenden Patentansprüchen angegeben ist, kombiniert werden, und zwar jeweils für sich allein oder in beliebiger Kombination mit einem oder anderen Merkmalen desselben oder anderer Unteransprüche, um weitere andere Ausführungsbeispiele zu erhalten.

Obwohl die Erfindung im Detail durch bevorzugte Ausführungsbeispiele näher illustriert und beschrieben wurde, so ist die Erfindung also nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 10: Transportanlage
- 20: Transportfahrzeug
- 21: Stützrad
- 30: Boden
- 40: Ortungsmarken
- 41: Markenabschnitt
- 42: Markenabschnitt
- 43: Markenabschnitt
- 44: Markenabschnitt
- 45: Trennpfad
- 46: Trennpfad
- 50: Schablone
- 51: Durchgangsloch
- 51a: Rand
- 52: Trennsteg
- 53: Trennsteg
- 54: Justageloch
- 55: Justagemarkierung
- 100: Sender
- 110: Lichtstrahl
- 120: Messgerät
- 130: Messgerät
- 131: Referenzpunkt
- 132: Referenzpunkt
- 133: Referenzpunkt
- 400: Unterabschnitt

- A: Zusatzkodierung
- A0: Achse
- A1: Achse
- B: Zusatzkodierung
- BT: Breite
- C: Zusatzkodierung
- D: Zusatzkodierung
- D1: Abstand
- D2: Abstand
- M: Mittelpunkt
- RP: Referenzpunkt
- V: Fahrtrichtung

## Patentansprüche

1. Verfahren zum Anbringen einer Ortungsmarke (40) auf einem von einem Fahrzeug (20) befahrbaren Boden (30), wobei die Ortungsmarke (40) dem Fahrzeug (20) beim Überfahren der Ortungsmarke (40) eine Selbstortung ermöglicht,
wobei ein erster kodierter, maschinell lesbarer Markenabschnitt (41), der für sich allein die Ortungsmarke (40) identifiziert, und ein zweiter kodierter, maschinell lesbarer Markenabschnitt (42), der ebenfalls für sich allein die Ortungsmarke (40) identifiziert, auf dem Boden (30) aufgebracht werden, und zwar räumlich getrennt voneinander unter Bildung zumindest eines Trennpfads (45),
**dadurch gekennzeichnet, dass**
- eine Schablone (50) auf dem Boden (30) platziert wird, die für jeden Markenabschnitt (41-44) jeweils ein passendes Durchgangsloch (51) aufweist,
- die Durchgangslöcher (51) durch mindestens einen Trennsteg (52, 53) der Schablone (50) getrennt sind und
- zum Anbringen der Ortungsmarke (40) auf dem Boden (30) jeder der Markenabschnitte (41-44) durch sein jeweiliges Durchgangsloch (51) hindurch geführt und an der durch das Durchgangsloch (51) definierten Stelle auf dem Boden (30) angebracht wird, wobei der Trennpfad (45) durch einen Bodenabschnitt des Bodens (30) gebildet wird, der von dem mindestens einen Trennsteg (52, 53) abgedeckt wird.

2. Verfahren nach Anspruch 1,
**dadurch gekennzeichnet, dass**
- die Ortungsmarke (40) einen dritten kodierten, maschinell lesbaren Markenabschnitt (43) aufweist, der ebenfalls für sich allein die Ortungsmarke (40) identifiziert, und
- die Ortungsmarke (40) einen vierten kodierten, maschinell lesbaren Markenabschnitt (44) aufweist, der ebenfalls für sich allein die Ortungsmarke (40) identifiziert,
- wobei der Trennpfad (45) auch den dritten und vierten Markenabschnitt (43, 44) voneinander trennt und geradlinig zwischen dem ersten und zweiten sowie dem dritten und vierten Markenabschnitt verläuft,
- wobei der erste und dritte Markenabschnitt (41, 43) auf einer Seite des Trennpfads (45) liegen und in Trennpfadrichtung des Trennpfads (45) gesehen fluchtend hintereinander angeordnet sind und
- wobei der zweite und vierte Markenabschnitt (42, 44) auf der anderen Seite des Trennpfads (45) liegen und in Trennpfadrichtung des Trennpfads (45) gesehen fluchtend hintereinander angeordnet sind.

3. Verfahren nach einem der voranstehenden Ansprüche,
**dadurch gekennzeichnet, dass**
- zusätzlich zu dem Trennpfad (45), der einen ersten Trennpfad (45) bildet, ein zweiter Trennpfad (46) vorhanden ist und
- der erste und dritte Markenabschnitt (41, 43) sowie der zweite und vierte Markenabschnitt (42, 44) voneinander durch den zweiten Trennpfad (46) getrennt sind.

4. Verfahren nach Anspruch 3,
**dadurch gekennzeichnet, dass**
der erste und zweite Trennpfad (45, 46) senkrecht zueinander angeordnet sind und ein Kreuz bilden, dessen Mittelpunkt (M) einen Drehsymmetriepunkt der Ortungsmarke (40) bildet.

5. Verfahren nach einem der voranstehenden Ansprüche,
**dadurch gekennzeichnet, dass**
jeder der Markenabschnitte (41-44) eine Zusatzkodierung enthält, die den jeweiligen Markenabschnitt (41-44) von jedem anderen Markenabschnitt (41-44) der Ortungsmarke (40) unterscheidet und die räumliche Lage des jeweiligen Markenabschnitts innerhalb der Ortungsmarke (40) angibt.

6. Verfahren nach einem der voranstehenden Ansprüche,
**dadurch gekennzeichnet, dass**
jeder der Markenabschnitte (41-44) jeweils zwei oder mehr Unterabschnitte (400) aufweist, die jeweils für sich allein die Ortungsmarke (40) identifizieren.

7. Verfahren nach Anspruch 6,
**dadurch gekennzeichnet, dass**
die Unterabschnitte (400) jedes Markenabschnitts jeweils in Form eines Gitters angeordnet sind und ein NxN-Array pro Markenabschnitt (41) bilden.

8. Verfahren nach einem der voranstehenden Ansprüche,
**dadurch gekennzeichnet, dass**
- die Schablone (50) einen ersten Trennsteg (52), der den genannten Trennpfad (45) definiert, und einen zweiten Trennsteg (53), der einen zweiten Trennpfad (46) definiert, aufweist und die zwei Trennstege (52, 53) ein Kreuz bilden, in dessen Kreuzungspunkt die Schablone (50) ein Justageloch (54) aufweist, und
- beim Aufsetzen der Schablone (50) auf dem Boden (30) das Justageloch (54) über einer auf dem Boden (30) vorhandenen Markierung justiert wird.

9. Verfahren nach einem der voranstehenden Ansprüche,
**dadurch gekennzeichnet, dass**
- die Schablone (50) zumindest eine Justagemarkierung (55) aufweist, die auf dem oder einem der Trennstege (52, 53) aufgebracht ist, und
- die Schablone (50) auf dem Boden (30) ausgerichtet wird, indem diese um die auf dem Boden (30) angebrachte Markierung gedreht wird, bis die Justagemarkierung (55) eine korrekte Ausrichtung der Schablone (50) in Bezug auf eine vorgegebene Richtung aufweist, insbesondere in eine vorgegebene Himmelsrichtung oder auf eine vorgegebene entfernte Ortsstelle zeigt.

10. Verfahren nach einem der voranstehenden Ansprüche,
**dadurch gekennzeichnet, dass**
- die Schablone (50) zumindest einen Adapter aufweist, der ein Anbringen eines eine Entfernungsmessung und/oder Ortsmessung und/oder Orientierungsmessung ermöglichenden Messgeräts (120, 130) ermöglicht und
- das Messgerät (120, 130) auf der Schablone (50) montiert wird und unter Heranziehung von Messergebnissen des Messgeräts (120, 130) die Schablone (50) auf dem Boden (30) positioniert und/oder ausgerichtet wird.

11. Schablone (50),
**dadurch gekennzeichnet, dass**
- diese zum Anbringen einer Ortungsmarke (40) gemäß einem Verfahren nach einem der voranstehenden Ansprüche ausgebildet ist und für jeden Markenabschnitt (41-44) jeweils ein passendes Durchgangsloch (51) aufweist und
- die Durchgangslöcher (51) durch mindestens einen Trennsteg (52, 53) der Schablone (50) getrennt sind,
- wobei jedes Durchgangsloch (51) form- und größenmäßig an seinen jeweils zugeordneten Markenabschnitt (41) angepasst ist, nämlich so, dass beim Durchführen der Markenabschnitte (41-44) durch ihr jeweils zugeordnetes Durchgangsloch (51) die Markenabschnitte (41-44) jeweils durch die Ränder (51a) des jeweiligen Durchgangslochs (51) justiert und ausgerichtet werden, und
- wobei zumindest ein Trennpfad (45) der Ortungsmarke (40) der Schablone (50) durch einen durch den mindestens einen Trennsteg (52, 53) frei gehaltenen Bodenabschnitt des Bodens (30) gebildet wird.

12. Transportanlage (10) mit zumindest einem Transportfahrzeug (20) und zumindest einer Ortungsmarke (40), die auf einem von dem Transportfahrzeug (20) zu befahrenden Boden (30) angebracht ist, wobei die Ortungsmarke (40) dem Transportfahrzeug (20) beim Überfahren der Ortungsmarke (40) eine Selbstortung ermöglicht,
**dadurch gekennzeichnet, dass**
die Ortungsmarke (40) eine Ortungsmarke (40) ist, die nach einem Verfahren nach einem der voranstehenden Ansprüche 1 bis 10 hergestellt worden ist.

13. Transportanlage (10) nach Anspruch 12,
**dadurch gekennzeichnet, dass**
die Ortungsmarke (40) mit einer Schablone nach Anspruch 11 angebracht worden ist.

## Claims

1. Method for affixing a location marker (40) to a ground (30) able to be driven over by a vehicle (20), wherein the location marker (40) enables the vehicle (20) to locate itself when it drives over the location marker (40),
wherein a first coded machine-readable marker section (41) that identifies the location marker (40) on its own and a second coded machine-readable marker section (42) that likewise identifies the location marker (40) on its own are applied to the ground (30), specifically in a manner physically spaced from one another so as to form at least one separating path (45),
**characterized in that**
- a template (50) is placed on the ground (30), the template having in each case a matching through-hole (51) for each marker section (41-44),
- the through-holes (51) are separated by at least one separator (52, 53) of the template (50), and
- to affix the location marker (40) to the ground (30), each of the marker sections (41-44) is guided through its respective through-hole (51) and affixed to the ground (30) at the location defined by the through-hole (51), wherein the separating path (45) is formed by a ground section of the ground (30) that is covered by the at least one separator (52, 53) .

2. Method according to Claim 1,
**characterized in that**
- the location marker (40) has a third coded machine-readable marker section (43) that likewise identifies the location marker (40) on its own, and
- the location marker (40) has a fourth coded machine-readable marker section (44) that likewise identifies the location marker (40) on its own,
- wherein the separating path (45) also separates the third and fourth marker section (43, 44) from one another and runs in a straight line between the first and second and between the third and fourth marker section,
- wherein the first and third marker section (41, 43) are located on one side of the separating path (45) and are arranged flush in succession as seen in the separating path direction of the separating path (45), and
- wherein the second and fourth marker section (42, 44) are located on the other side of the separating path (45) and are arranged flush in succession as seen in the separating path direction of the separating path (45).

3. Method according to either of the preceding claims, **characterized in that**
- a second separating path (46) is present in addition to the separating path (45) that forms a first separating path (45), and
- the first and third marker section (41, 43) and the second and fourth marker section (42, 44) are separated from one another by the second separating path (46).

4. Method according to Claim 3,
**characterized in that**
the first and second separating path (45, 46) are arranged perpendicular to one another and form a cross, the midpoint (M) of which forms a point of rotational symmetry of the location marker (40).

5. Method according to one of the preceding claims,
**characterized in that**
each of the marker sections (41-44) contains an additional coding that distinguishes the respective marker section (41-44) from each other marker section (41-44) of the location marker (40) and indicates the spatial position of the respective marker section within the location marker (40).

6. Method according to one of the preceding claims,
**characterized in that**
each of the marker sections (41-44) has in each case two or more subsections (400) that each identify the location marker (40) on their own.

7. Method according to Claim 6,
**characterized in that**
the subsections (400) of each marker section are each arranged in the form of a grid and form an NxN array for each marker section (41).

8. Method according to one of the preceding claims,
**characterized in that**
- the template (50) has a first separator (52) that defines the first separating path (45) and a second separator (53) that defines a second separating path (46), and the two separators (52, 53) form a cross at the point of intersection of which the template (50) has an adjustment hole (54), and
- when the template (50) is placed on the ground (30), the adjustment hole (54) is adjusted above a marker present on the ground (30).

9. Method according to one of the preceding claims,
**characterized in that**
- the template (50) has at least one adjustment marking (55) that is applied to the separator or one of the separators (52, 53), and
- the template (50) is aligned with the ground (30) by rotating said template about the marking affixed to the ground (30) until the adjustment marking (55) exhibits a correct alignment of the template (50) in relation to a predefined direction, in particular points in a predefined compass direction or towards a predefined remote location.

10. Method according to one of the preceding claims,
**characterized in that**
- the template (50) has at least one adapter that makes it possible to install a measuring device (120, 130) that enables a distance measurement and/or location measurement and/or orientation measurement, and
- the measuring device (120, 130) is mounted on the template (50), and the template (50) is positioned on and/or aligned with the ground (30) using measurement results from the measuring device (120, 130) .

11. Template (50),
**characterized in that**
- it is designed for affixing a location marker (40) in accordance with a method according to one of the preceding claims and has in each case a matching through-hole (51) for each marker section (41-44), and
- the through-holes (51) are separated by at least one separator (52, 53) of the template (50),
- wherein the shape and size of each through-hole (51) is adapted to its respectively associated marker section (41), specifically such that, when the marker sections (41-44) are passed through their respectively associated through-hole (51), the marker sections (41-44) are each adjusted and aligned by the edges (51a) of the respective through-hole (51), and
- wherein at least one separating path (45) of the location marker (40) of the template (50) is formed by a ground section of the ground (30) that is kept clear by the at least one separator (52, 53).

12. Transport system (10) comprising at least one transport vehicle (20) and at least one location marker (40) that is affixed to a ground (30) to be driven over by the transport vehicle (20), wherein the location marker (40) enables the transport vehicle (20) to locate itself when it drives over the location marker (40),
**characterized in that**
the location marker (40) is a location marker (40) that has been produced in accordance with a method according to one of preceding Claims 1 to 10.

13. Transport system (10) according to Claim 12,
**characterized in that**
the location marker (40) has been affixed using a template according to Claim 11.

## Revendications

1. Procédé d'application d'une marque de localisation (40) sur un sol (30) pouvant être parcouru par un véhicule (20), la marque de localisation (40) permettant au véhicule (20) de s'autolocaliser lorsqu'il passe sur la marque de localisation (40),
une première section de marque (41) codée, lisible par machine, qui identifie à elle seule la marque de localisation (40), et une deuxième section de marque (42) codée, lisible par machine, qui identifie également à elle seule la marque de localisation (40), étant appliquées sur le sol (30), et ce séparées dans l'espace l'une de l'autre en formant au moins un chemin de séparation (45),
**caractérisé en ce que**
- un gabarit (50) est placé sur le sol (30), qui présente pour chaque section de marque (41-44) respectivement un trou de passage (51) adapté,
- les trous de passage (51) sont séparés par au moins une nervure de séparation (52, 53) du gabarit (50) et
- pour appliquer la marque de localisation (40) sur le sol (30), chacune des sections de marque (41-44) est passée à travers son trou de passage (51) respectif et appliquée sur le sol (30) à l'emplacement défini par le trou de passage (51), le chemin de séparation (45) étant formé par une section de sol du sol (30) qui est recouverte par l'au moins une nervure de séparation (52, 53) .

2. Procédé selon la revendication 1, **caractérisé en ce que**
- la marque de localisation (40) présente une troisième section de marque (43) codée, lisible par machine, qui identifie également à elle seule la marque de localisation (40), et
- la marque de localisation (40) présente une quatrième section de marque (44) codée, lisible par machine, qui identifie également à elle seule la marque de localisation (40),
- le chemin de séparation (45) sépare également les troisième et quatrième sections de marque (43, 44) l'une de l'autre et s'étend en ligne droite entre les première et deuxième et les troisième et quatrième sections de marque,
- la première et la troisième section de marque (41, 43) étant situées d'un côté du chemin de séparation (45) et étant agencées alignées l'une derrière l'autre, vues dans la direction du chemin de séparation (45), et
- la deuxième et la quatrième section de marque (42, 44) étant situées de l'autre côté du chemin de séparation (45) et étant agencées alignées l'une derrière l'autre, vues dans la direction du chemin de séparation (45).

3. Procédé selon l'une quelconque des revendications précédentes, **caractérisé en ce que**
- en plus du chemin de séparation (45), qui forme un premier chemin de séparation (45), un deuxième chemin de séparation (46) est présent, et
- les première et troisième sections de marque (41, 43) et les deuxième et quatrième sections de marque (42, 44) sont séparées l'une de l'autre par le deuxième chemin de séparation (46).

4. Procédé selon la revendication 3, **caractérisé en ce que** les premier et deuxième chemins de séparation (45, 46) sont agencés perpendiculairement l'un à l'autre et forment une croix dont le centre (M) forme un point de symétrie de rotation de la marque de localisation (40).

5. Procédé selon l'une quelconque des revendications précédentes, **caractérisé en ce que** chacune des sections de marque (41-44) contient un code supplémentaire qui distingue la section de marque respective (41-44) de chaque autre section de marque (41-44) de la marque de localisation (40) et indique la position spatiale de la section de marque respective à l'intérieur de la marque de localisation (40).

6. Procédé selon l'une quelconque des revendications précédentes, **caractérisé en ce que** chacune des sections de marque (41-44) présente deux ou plus de deux sous-sections (400) qui identifient respectivement à elles seules la marque de localisation (40).

7. Procédé selon la revendication 6, **caractérisé en ce que** les sous-sections (400) de chaque section de marque sont chacune agencées sous la forme d'une grille et forment un réseau de NxN par section de marque (41).

8. Procédé selon l'une quelconque des revendications précédentes, **caractérisé en ce que**
- le gabarit (50) présente une première nervure de séparation (52) définissant ledit chemin de séparation (45) et une deuxième nervure de séparation (53) définissant un deuxième chemin de séparation (46), les deux nervures de séparation (52, 53) formant une croix au point d'intersection de laquelle le gabarit (50) présente un trou d'ajustement (54), et
- lors de la mise en place du gabarit (50) sur le sol (30), le trou d'ajustement (54) est ajusté au-dessus d'une marque présente sur le sol (30).

9. Procédé selon l'une quelconque des revendications précédentes, **caractérisé en ce que**
- le gabarit (50) présente au moins une marque d'ajustement (55) appliquée sur la ou l'une des nervures de séparation (52, 53), et
- le gabarit (50) est orienté sur le sol (30), en le faisant tourner autour de la marque appliquée sur le sol (30) jusqu'à ce que la marque d'alignement (55) présente une orientation correcte du gabarit (50) par rapport à une direction prédéterminée, notamment pointant vers un point cardinal prédéterminé ou vers un emplacement distant prédéterminé.

10. Procédé selon l'une quelconque des revendications précédentes, **caractérisé en ce que**
- le gabarit (50) présente au moins un adaptateur permettant l'application d'un appareil de mesure (120, 130) permettant une mesure de distance et/ou une mesure de position et/ou une mesure d'orientation, et
- l'appareil de mesure (120, 130) est monté sur le gabarit (50) et, en utilisant les résultats de mesure de l'appareil de mesure (120, 130), le gabarit (50) est positionné et/ou orienté sur le sol (30).

11. Gabarit (50), **caractérisé en ce que**
- celui-ci est réalisé pour l'application d'une marque de localisation (40) par un procédé selon l'une quelconque des revendications précédentes et présente pour chaque section de marque (41-44) respectivement un trou de passage (51) adapté et
- les trous de passage (51) sont séparés par au moins une nervure de séparation (52, 53) du gabarit (50),
- chaque trou de passage (51) étant adapté en forme et en taille à sa section de marque (41) respectivement associée, à savoir de telle sorte que, lors du passage des sections de marque (41-44) à travers leur trou de passage (51) respectif associé, les sections de marque (41-44) sont respectivement ajustées et orientées par les bords (51a) du trou de passage (51) respectif, et
- au moins un chemin de séparation (45) de la marque de localisation (40) du gabarit (50) étant formé par une section de sol du sol (30) maintenue libre par l'au moins une nervure de séparation (52, 53).

12. Installation de transport (10) avec au moins un véhicule de transport (20) et au moins une marque de localisation (40) qui est appliquée sur un sol (30) à parcourir par le véhicule de transport (20), la marque de localisation (40) permettant au véhicule de transport (20) de s'autolocaliser lorsqu'il passe sur la marque de localisation (40),
**caractérisée en ce que**
la marque de localisation (40) est une marque de localisation (40) qui a été fabriquée par un procédé selon l'une quelconque des revendications 1 à 10 précédentes.

13. Installation de transport (10) selon la revendication 12, **caractérisée en ce que** la marque de localisation (40) a été appliquée avec un gabarit selon la revendication 11.
